# EUROPÄISCHE PATENTANMELDUNG

(11) **EP 4 624 761 A1**
(43) Veröffentlichungstag der Anmeldung: **01.10.2025**
(21) Anmeldenummer: 25164663.4
(22) Anmeldetag: 19.03.2025
(51) Int. Cl.: F15B 11/044

(54) **STEUERVENTIL ZUR LASTUNABHÄNGIGEN STEUERUNG EINES HYDRAULISCHEN FAHRMOTORS**

(30) Priorität: 28.03.2024 DE 102024109014
(71) Anmelder: LHY Powertrain GmbH & Co. KG, 63741 Aschaffenburg (DE)
(72) Erfinder: Kraft, Wolfgang, 63762 Ringheim (DE)
(74) Vertreter: Patentship Patentanwaltgesellschaft

(57) **Zusammenfassung**

Die Erfindung betrifft ein Steuerventil (10) zur lastunabhängigen Steuerung eines hydraulischen Fahrmotors (6) mit einem Steuerschieber (11) zur Steuerung der Bewegungsrichtung und der Bewegungsgeschwindigkeit des Fahrmotors (6), wobei das Steuerventil (10) an einen Pumpenanschluss (P), an einen Behälteranschluss (T1; T2), an mindestens einen Lastdruckmeldeleitungsanschluss (LS1; LS2), an einen ersten Fahrmotoranschluss (A) und an einen zweiten Fahrmotoranschluss (B) angeschlossen ist, wobei das Steuerventil (10) eine erste Druckwaage (DW1) und eine zweite Druckwaage (DW2) umfasst. Es ist eine Proportionalventileinrichtung (30) vorgesehen, mittels der in einer ersten Steuerstellung (20b) des Steuerschiebers (11) die Beaufschlagung der zweiten Druckwaage (DW2) in Richtung einer Sperrstellung (SST) in Abhängigkeit von der Drehzahl des Fahrmotors (6) und/oder in Abhängigkeit von dem am ersten Fahrmotoranschluss (A) anstehenden Zulaufdruck des Fahrmotors (6) steuerbar ist und mittels der in einer zweiten Steuerstellung (20c) des Steuerschiebers (11) die Beaufschlagung der ersten Druckwaage (DW1) in Richtung einer Sperrstellung (SST) in Abhängigkeit von der Drehzahl des Fahrmotors (6) und/oder in Abhängigkeit von dem am zweiten Fahrmotoranschluss (B) anstehenden Zulaufdruck des Fahrmotors (6) steuerbar ist.

## Beschreibung

Die Erfindung betrifft ein Steuerventil zur lastunabhängigen Steuerung eines hydraulischen Fahrmotors mit einem Steuerschieber zur Steuerung der Bewegungsrichtung und der Bewegungsgeschwindigkeit des Fahrmotors, wobei das Steuerventil an einen Pumpenanschluss, an einen Behälteranschluss, an mindestens einen Lastdruckmeldeleitungsanschluss, an einen ersten Fahrmotoranschluss und an einen zweiten Fahrmotoranschluss angeschlossen ist, wobei das Steuerventil eine erste Druckwaage und eine zweite Druckwaage umfasst, wobei in einer ersten Steuerstellung des Steuerschiebers, in dem der Pumpenanschluss mittels eines ersten Zuströmpfades mit dem ersten Fahrmotoranschluss und der zweite Fahrmotoranschluss mittels eines ersten Abströmpfades mit dem Behälteranschluss verbunden ist, die erste Druckwaage in dem ersten Zuströmpfad angeordnet ist und die zweite Druckwaage in dem ersten Abströmpfad angeordnet ist, wobei in einer zweiten Steuerstellung des Steuerschiebers, in dem der Pumpenanschluss mittels eines zweiten Zuströmpfades mit dem zweiten Fahrmotoranschluss und der erste Fahrmotoranschluss mittels eines zweiten Abströmpfades mit dem Behälteranschluss verbunden ist, die zweite Druckwaage in dem zweiten Zuströmpfad angeordnet ist und die erste Druckwaage in dem zweiten Abströmpfad angeordnet ist, wobei in der ersten Steuerstellung des Steuerschiebers mittels der zweiten Druckwaage die in dem ersten Abströmpfad vom Fahrmotor zu einem Behälter abströmende Druckmittelmenge steuerbar ist und in der zweiten Steuerstellung des Steuerschiebers mittels der ersten Druckwaage die in dem zweiten Abströmpfad vom Fahrmotor zum Behälter abströmende Druckmittelmenge steuerbar ist.

Die Erfindung betrifft weiterhin einen hydrostatischer Fahrantrieb mit einem derartigen Steuerventil und eine mobile Arbeitsmaschine mit einem derartigen hydrostatischen Fahrantrieb.

Derartige Steuerventile, die mit zwei Druckwaagen versehen sind, von denen eine Druckwaage den entsprechenden Zuströmpfad und somit die Zulaufseite des hydraulischen Fahrmotors steuert und die andere Druckwaage den entsprechenden Abströmpfad und somit die Abströmseite des hydraulischen Fahrmotors steuert, werden auch als Fahrbremsventile bezeichnet.

Aus der DE 198 51 553 A1 ist ein gattungsgemäßes Steuerventil, das einen hydraulischen Fahrmotor steuert, bekannt. Bei der DE 198 51 553 A1 ist zur Ansteuerung der den Abströmpfad und somit die Abströmseite des hydraulischen Fahrmotors steuernden Druckwaage ein federbelastetes Rückschlagventil oder ein Differenzdruckregelventil vorgesehen, das einen entsprechenden Differenzdruck vorgibt, von dem den Abströmpfad und somit die Abströmseite des hydraulischen Fahrmotors steuernden Druckwaage angesteuert ist. Bei dem aus der DE 198 51 553 A1 bekannten Steuerventil ist nachteilig, dass die Ansteuerung der den Abströmpfad und somit die Abströmseite des hydraulischen Fahrmotors steuernden Druckwaage nicht an die Fahrsituation angepasst werden kann und eine feste Zuordnung von Zulaufseite und Ablaufseite des Fahrmotors vorgesehen ist, d.h. die Charakteristik der Ablaufseite des Fahrmotors mit der Charakteristik der Zulaufseite des Fahrmotors hydraulisch gekoppelt ist, so dass die Zulaufseite und die Ablaufseite an dem Steuerventil aufeinander abgestimmt sein müssen.

Der vorliegenden Erfindung liegt die Aufgabe zugrunde, ein Steuerventil der eingangs genannten Gattung, einen entsprechenden hydrostatischen Fahrantrieb mit einem derartigen Steuerventil und eine entsprechende mobile Arbeitsmaschine mit einem derartigen Fahrantrieb zur Verfügung zu stellen, das hinsichtlich eines oder mehrerer der genannten Nachteile verbessert ist.

Diese Aufgabe wird erfindungsgemäß dadurch gelöst, dass eine Proportionalventileinrichtung vorgesehen ist, mittels der in der ersten Steuerstellung des Steuerschiebers die Beaufschlagung der zweiten Druckwaage in Richtung einer Sperrstellung in Abhängigkeit von der Drehzahl des Fahrmotors und/oder in Abhängigkeit von dem am ersten Fahrmotoranschluss anstehenden Zulaufdruck des Fahrmotors steuerbar ist und mittels der in der zweiten Steuerstellung des Steuerschiebers die Beaufschlagung der ersten Druckwaage in Richtung einer Sperrstellung in Abhängigkeit von der Drehzahl des Fahrmotors und/oder in Abhängigkeit von dem am zweiten Fahrmotoranschluss anstehenden Zulaufdruck des Fahrmotors steuerbar ist.

Erfindungsgemäß ist somit eine Proportionalventileinrichtung vorgesehen, mit der die den entsprechenden Abströmpfad und somit die Ablaufseite des Fahrmotors steuernde Druckwaage in Abhängigkeit von der Drehzahl des Fahrmotors und/oder in Abhängigkeit von dem an der Zulaufseite des Fahrmotors anstehenden Zulaufdruck des Fahrmotors gesteuert ist. Hierdurch kann die Abbremsung des Fahrmotors mittels der entsprechenden Druckwaage des Steuerventils vollkommen frei eingestellt werden und damit die Ansteuerung der den Abströmpfad und somit die Abströmseite des hydraulischen Fahrmotors steuernden Druckwaage an die Fahrsituation angepasst werden. Weiterhin ist es nicht mehr erforderlich, die Zulaufseite und die Ablaufseite an dem Steuerventil aufeinander abzustimmen.

Gemäß einer vorteilhaften Ausgestaltungsform der Erfindung ist in der ersten Steuerstellung des Steuerschiebers die erste Druckwaage in Richtung einer Öffnungsstellung von dem Druck stromab einer ersten zulaufseitigen Drosselstelle des Steuerschiebers und in Richtung der Sperrstellung von dem Lastdruck des Fahrmotors sowie einer Feder beaufschlagbar und in der zweiten Steuerstellung des Steuerschiebers die zweite Druckwaage in Richtung einer Öffnungsstellung von dem Druck stromab einer zweiten zulaufseitigen Drosselstelle des Steuerschiebers und in Richtung der Sperrstellung von dem Lastdruck des Fahrmotors sowie einer Feder beaufschlagbar. Hierdurch kann von der entsprechenden Druckwaage in einfacher Weise die Zulaufseite des Fahrmotors lastunabhängig gesteuert werden.

Gemäß einer vorteilhaften Ausgestaltungsform der Erfindung ist in der ersten Steuerstellung des Steuerschiebers die zweite Druckwaage in Richtung der Öffnungsstellung von dem Druck stromab einer ersten ablaufseitigen Drosselstelle des Steuerschiebers und in Richtung der Sperrstellung von einem Ausgangsdruck der Proportionalventileinrichtung sowie einer Feder beaufschlagbar und in der zweiten Steuerstellung des Steuerschiebers die erste Druckwaage in Richtung einer Öffnungsstellung von dem Druck stromab einer zweiten ablaufseitigen Drosselstelle des Steuerschiebers und in Richtung der Sperrstellung von dem Ausgangsdruck der Proportionalventileinrichtung sowie einer Feder beaufschlagbar. Hierdurch kann mittels der entsprechenden Druckwaage in einfacher Weise die Ablaufseite des Fahrmotors und somit die Abbremsung des Fahrmotors in Abhängigkeit von dem von der Proportionalventileinrichtung erzeugten Ausgangsdruck gesteuert werden.

Gemäß einer vorteilhaften Ausgestaltungsform der Erfindung ist die Proportionalventileinrichtung elektrisch angesteuert. Hierdurch ergibt sich eine einfache Ansteuerung der Proportionalventileinrichtung.

Gemäß einer vorteilhaften Ausgestaltungsform der Erfindung weist die Proportionalventileinrichtung mindestens ein elektrisch angesteuertes Proportionaldruckminderventil auf, das eingangsseitig an eine Versorgungsdruckquelle angeschlossen ist, ausgangsseitig an eine den Ausgangsdruck führende Steuerleitung sowie ausgangsseitig an einen Behälter angeschlossen ist. Mit einem derartig elektrisch angesteuerten Proportionaldruckminderventil kann auf einfache Weise aus dem Versorgungsdruck der Versorgungsdruckquelle der die Druckwaage ansteuernde Ausgangsdruck erzeugt werden.

Gemäß einer vorteilhaften Ausgestaltungsform der Erfindung ist eine elektronische Steuereinrichtung vorgesehen, die eingangsseitig mit einer die Drehzahl des Fahrmotors erfassenden Drehzahlsensoreinrichtung und/oder einer den am ersten Fahrmotoranschluss und/oder am zweiten Fahrmotoranschluss anstehenden Zulaufdruck des Fahrmotors erfassenden Drucksensoreinrichtung in Wirkverbindung steht, und ausgangsseitig mit der Proportionalventileinrichtung zu deren Ansteuerung in Wirkverbindung steht. Der Ansteuerdruck und somit das Regelsignal der die Ablaufseite des Fahrmotors steuernden Druckwaage wird somit in einfacher Weise durch ein elektrisches Signal aus der Drehzahl des Fahrmotors und/oder aus dem Zulaufdruck des Fahrmotors durch entsprechende Ansteuerung des elektrisch angesteuerten Proportionaldruckminderventil erzeugt. Das elektrisch angesteuerte Proportionaldruckminderventil wird bevorzugt von der elektronischen Steuereinrichtung durch Auswertung des Fahrmotor-Drehzahlsignals oder des Zulaufdruckes des Fahrmotors angesteuert und aktiviert die die Ablaufseite des Fahrmotors steuernde Druckwaage zur Abbremsung des Fahrmotors.

Gemäß einer vorteilhaften Ausgestaltungsform der Erfindung ist die Proportionalventileinrichtung eingangsseitig an eine mit dem Pumpenanschluss in Verbindung stehende Pumpe angeschlossen. Hierdurch kann eine einfache Versorgung der Proportionalventileinrichtung aus dem Pumpendruck der den Fahrmotor versorgenden Pumpe erzielt werden.

Gemäß einer alternativen und ebenfalls vorteilhaften Ausgestaltungsform der Erfindung ist die Proportionalventileinrichtung eingangsseitig mittels einer Wechselventileinrichtung mit den Fahrmotoranschlüssen verbunden. Hierdurch kann eine einfache Versorgung der Proportionalventileinrichtung aus dem in der Ablaufseite des Fahrmotors anstehenden Bremsdruck erzielt werden. In der Bremsphase des Fahrmotors muss daher die Pumpe nicht auf Druck gebracht werden, um einen Versorgungsdruck für die Proportionalventileinrichtung zu erzeugen.

Die Wechselventileinrichtung steht hierbei vorteilhafterweise an einem ersten Eingang mit dem ersten Fahrmotoranschluss in Verbindung, an einem zweiten Eingang mit dem zweiten Fahrmotoranschluss in Verbindung und an einem Ausgang mit der Proportionalventileinrichtung in Verbindung. Hierdurch kann in einfacher Weise für beide Drehrichtungen des Fahrmotors eine einfache Versorgung der Proportionalventileinrichtung aus dem in der entsprechenden Ablaufseite des Fahrmotors anstehenden Bremsdruck erzielt werden.

Gemäß einer vorteilhaften Ausgestaltungsform der Erfindung weist die Proportionalventileinrichtung ein erstes elektrisch angesteuertes Proportionaldruckminderventil auf, das zur Steuerung der ersten Druckwaage in Richtung der Sperrstellung vorgesehen ist, und ein zweites elektrisch angesteuertes Proportionaldruckminderventil auf, das zur Steuerung der zweiten Druckwaage in Richtung der Sperrstellung vorgesehen ist. Mit zwei elektrisch angesteuerten Proportionaldruckminderventilen, die jeweils eine der beiden Druckwaagen ansteuern, kann in einfacher Weise eine Ansteuerung der entsprechenden in der Ablaufseite angeordneten Druckwaage in der Bremsphase des Fahrmotors erzielt werden.

Gemäß einer alternativen und ebenfalls vorteilhaften Ausgestaltungsform der Erfindung weist die Proportionalventileinrichtung ein einzelnes elektrisch angesteuertes Proportionaldruckminderventil auf, das zur Steuerung der ersten Druckwaage in Richtung der Sperrstellung und zur Steuerung der zweiten Druckwaage in Richtung der Sperrstellung vorgesehen ist. Mit einem einzelnen elektrisch angesteuertes Proportionaldruckminderventil kann bei geringem Bauaufwand eine entsprechende Ansteuerung der die Ablaufseite des Fahrmotors steuernden Druckwaage erzielt werden.

Gemäß einer vorteilhaften Ausgestaltungsform der Erfindung weist das Steuerventil einen ersten Steueranschluss auf, der in der zweiten Steuerstellung des Steuerschiebers die Beaufschlagung der ersten Druckwaage in Richtung der Sperrstellung steuert, und einen zweiten Steueranschluss aufweist, der in der ersten Steuerstellung des Steuerschiebers die Beaufschlagung der zweiten Druckwaage in Richtung der Sperrstellung steuert. Mit derartigen Steueranschlüssen kann in einfacher Weise von der Proportionalventileinrichtung mit dem erzeugten Ausgangsdruck eine entsprechende Ansteuerung der in der Ablaufseite des Fahrmotors angeordneten Druckwaage erzielt werden.

Gemäß einer vorteilhaften Ausgestaltungsform der Erfindung ist das erste elektrisch angesteuerte Proportionaldruckminderventil mit einer den Ausgangsdruck führenden ersten Steuerleitung mit dem ersten Steueranschluss des Steuerventils verbunden, und ist das zweite elektrisch angesteuerte Proportionaldruckminderventil mit einer den Ausgangsdruck führenden zweiten Steuerleitung mit dem zweiten Steueranschluss des Steuerventils verbunden. Bei der Ausführung der Proportionalventileinrichtung mit zwei elektrisch angesteuerten Proportionaldruckminderventilen kann hierdurch in einfacher Weise eine Ansteuerung der beiden Druckwaagen von dem mittels der Proportionaldruckminderventilen erzeugten Ausgangsdrücken erzielt werden.

Gemäß einer vorteilhaften Ausgestaltungsform der Erfindung ist das einzelne elektrisch angesteuerte Proportionaldruckminderventil mit einer den Ausgangsdruck führenden Steuerleitung mit dem ersten Steueranschluss des Steuerventils und mit dem zweiten Steueranschluss des Steuerventils verbunden. Bei der Ausführung der Proportionalventileinrichtung mit einem einzelnen elektrisch angesteuerten Proportionaldruckminderventil kann hierdurch in einfacher Weise eine Ansteuerung der beiden Druckwaagen von dem mittels des Proportionaldruckminderventils erzeugten Ausgangsdruck erzielt werden.

Die Aufgabe wird weiterhin durch einen hydrostatischen Fahrantrieb aufweisend eine Pumpe, einen hydraulischen Fahrmotor und ein erfindungsgemäßes Steuerventil, das den Fahrmotor ansteuert, gelöst.

Die Aufgabe wird weiterhin durch eine mobile Arbeitsmaschine, insbesondere einen Bagger, mit einem erfindungsgemäßen hydrostatischen Fahrantrieb gelöst.

Gemäß einer vorteilhaften Ausgestaltungsform der Erfindung weist die mobile Arbeitsmaschine einen Unterwagen und einen auf dem Unterwagen drehbar angeordneten Oberwagen auf, wobei der Fahrmotor im Unterwagen angeordnet ist und das Steuerventil im Oberwagen angeordnet ist. Mit dem erfindungsgemäßen Steuerventil, das mit den Druckwaagen die Zulaufseite und die Ablaufseite des Fahrmotors steuert und somit als ein Fahrbremsventil ausgebildet ist, das die Funktion von Bremsventilen für den Fahrmotor aufweist, kann auf aufwändige, direkt an dem Fahrmotor im Unterwagen angeordnete Bremsventile verzichtet werden und diese entfallen, wodurch sich ein geringer Bauaufwand der Arbeitsmaschine erzielen lässt.

Die Erfindung weist eine Reihe von Vorteilen auf:
Das erfindungsgemäße Steuerventil weist mit den die Ablaufseite des Fahrmotors steuernden Druckwaagen die Funktion von Bremsventilen auf. Die Bremsventilfunktion ist somit in das Steuerventil integriert.

Mit dem mindestens einen elektrisch angesteuerten Proportionaldruckminderventil, das die in der entsprechenden Ablaufseite des Fahrmotors angeordnete Druckwaage für die Bremsventilfunktion aktiviert und ansteuert, kann durch die Nutzung eines Drehzahlsensors am Fahrmotor und/oder durch die Nutzung von den Zulaufdruck des Fahrmotors erfassenden Drucksensoren die Bremsung des Fahrmotors vollkommen frei eingestellt werden.

Sofern das Steuerventil von der elektronischen Steuereinrichtung elektrisch oder elektro-hydraulisch in die erste Steuerstellung und in die zweite Steuerstellung betätigt ist, bleiben die elektrischen Komponenten in der geschützten Umgebung des Steuerventils und die Bremsrampen können beliebig gewählt werden.

Weitere Vorteile und Einzelheiten der Erfindung werden anhand der in den schematischen Figuren dargestellten Ausführungsbeispiele näher erläutert. Hierbei zeigen
- Figur 1: einen Schaltplan einer ersten Ausführungsform der Erfindung,
- Figur 2: einen Schaltplan einer zweiten Ausführungsform der Erfindung und
- Figur 3: einen Schaltplan einer dritten Ausführungsform der Erfindung.

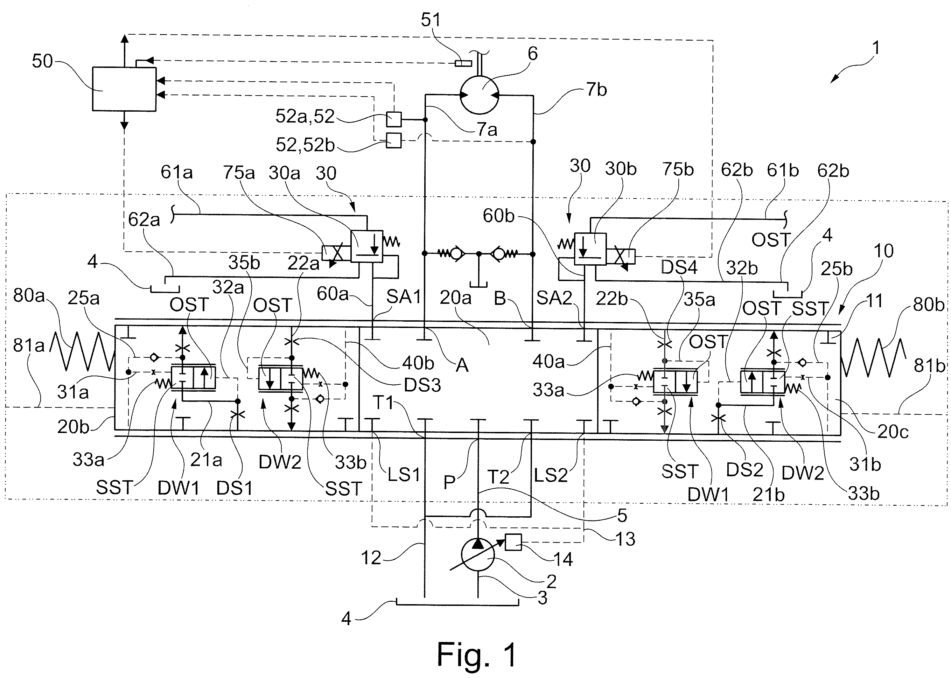

In den Figuren 1 bis 3 ist jeweils ein Schaltplan eines hydrostatischen Fahrantriebs 1 einer mobilen Arbeitsmaschine, beispielsweise eines Baggers, dargestellt. Gleiche Bauteile sind in den Figuren 1 bis 3 mit gleichen Bezugsziffern versehen.

Der hydrostatische Fahrantrieb 1 ist als offener Kreislauf ausgebildet und weist eine Pumpe 2 auf, die im offenen Kreislauf betrieben ist. Die Pumpe 2 saugt mittels einer Ansaugleitung 3 Druckmittel aus einem Behälter 4 an und fördert das Druckmittel in eine Förderleitung 5. Die Pumpe 2 ist im dargestellten Ausführungsbeispiel als im Fördervolumen verstellbare Load-Sensing geregelte Verstellpumpe ausgebildet.

Der Fahrantrieb 1 weist einen hydraulischen Fahrmotor 6 auf, der an einem ersten Anschluss an eine erste Druckmittelleitung 7a und an einem zweiten Anschluss an eine zweite Druckmittelleitung 7b angeschlossen ist.

Der Fahrantrieb 1 weist zur lastunabhängigen Steuerung des hydraulischen Fahrmotors 6 ein Steuerventil 10 auf. Das Steuerventil 10 ist als Längsschieberventil mit einem längsverschiebbaren Steuerschieber 11 ausgebildet, mit dem die Bewegungsrichtung (Drehrichtung) und die Bewegungsgeschwindigkeit (Drehzahl) des Fahrmotors 6 gesteuert werden kann.

Das Steuerventil 10 weist einen Pumpenanschluss P, einen ersten Behälteranschluss T1, einen zweiten Behälteranschluss T2, einen ersten Lastdruckmeldeleitungsanschluss LS1, einen zweiten Lastdruckmeldeleitungsanschluss LS1, einen ersten Fahrmotoranschluss A und an einen zweiten Fahrmotoranschluss B auf.

Der Pumpenanschluss P ist an die Förderleitung 5 der Pumpe 2 angeschlossen. Der erste Behälteranschluss T1 und der zweite Behälteranschluss T2 sind an eine zu dem Behälter 4 geführte Behälterleitung 12 angeschlossen. Der erste Lastdruckmeldeleitungsanschluss LS1 und der zweite Lastdruckmeldeleitungsanschluss LS1 sind an eine Lastdruckmeldeleitung 13 angeschlossen, die zu einem das Fördervolumen der als Verstellpumpe ausgebildeten Pumpe 2 steuernden Load-Sensing-Regler 14 geführt ist. Der erste Fahrmotoranschluss A ist an die erste Druckmittelleitung 7a angeschlossen. Der zweite Fahrmotoranschluss B ist an die zweite Druckmittelleitung 7b angeschlossen.

Das Steuerventil 10 weist eine erste Druckwaage DW1 und eine zweite Druckwaage DW2 auf. Im dargestellten Ausführungsbeispiel sind die Druckwaagen DW1, DW2 in den Steuerschieber 11 der Steuerventils 10 eingebaut und integriert.

Das Steuerventil 10 weist eine als Neutralstellung ausgebildete Mittelstellung 20a auf, in der der Pumpenanschluss P, die Behälteranschlüsse T1, T2, die Lastdruckmeldeleitungsanschlüsse LS1, LS2, der erste Fahrmotoranschluss A und der zweite Fahrmotoranschluss B jeweils abgesperrt sind.

Das Steuerventil 10 weist eine erste Steuerstellung 20b auf, in der der Pumpenanschluss P mittels eines im Steuerschieber 11 ausgebildeten ersten Zuströmpfades 21a mit dem ersten Fahrmotoranschluss A verbunden ist und der zweite Fahrmotoranschluss B mittels eines im Steuerschieber 11 ausgebildeten ersten Abströmpfades 22a mit dem Behälteranschluss T2 verbunden ist. Der erste Zuströmpfad 21a bildet die Zulaufseite des Fahrmotors 6 und der erste Abströmpfad 22a die Ablaufseite des Fahrmotors 6. In der ersten Steuerstellung 20b ist eine den Zulaufdruck in der Zulaufseite des Fahrmotors 6 erfassende Lastdruckmeldeleitung 25a mit dem Lastdruckmeldeleitungsanschluss LS1 verbunden. In der ersten Steuerstellung 20b sind der Behälteranschluss T1 und der Lastdruckmeldeleitungsanschluss LS2 abgesperrt.

In der ersten Steuerstellung 20b des Steuerventils 10 und somit der Steuerschiebers 11 ist die erste Druckwaage DW1 in dem ersten Zuströmpfad 21a angeordnet und die zweite Druckwaage DW2 in dem ersten Abströmpfad 22a angeordnet.

Das Steuerventil 10 weist eine zweite Steuerstellung 20c auf, in der der Pumpenanschluss P mittels eines im Steuerschieber 11 ausgebildeten zweiten Zuströmpfades 21b mit dem zweiten Fahrmotoranschluss B verbunden ist und der erste Fahrmotoranschluss A mittels eines im Steuerschieber 11 ausgebildeten zweiten Abströmpfades 22b mit dem Behälteranschluss T1 verbunden ist. Der zweite Zuströmpfad 21b bildet die Zulaufseite des Fahrmotors 6 und der zweite Abströmpfad 22b die Ablaufseite des Fahrmotors 6. In der zweiten Steuerstellung 20c ist eine den Zulaufdruck in der Zulaufseite des Fahrmotors 6 erfassende Lastdruckmeldeleitung 25b mit dem Lastdruckmeldeleitungsanschluss LS2 verbunden. In der zweiten Steuerstellung 20c sind der Behälteranschluss T2 und der Lastdruckmeldeleitungsanschluss LS1 abgesperrt.

In der zweiten Steuerstellung 20c des Steuerventils 10 und somit der Steuerschiebers 11 ist die zweite Druckwaage DW2 in dem zweiten Zuströmpfad 21b angeordnet und die erste Druckwaage DW1 in dem zweiten Abströmpfad 22b angeordnet.

In der ersten Steuerstellung 20b des Steuerschiebers 11 ist somit mittels der ersten Druckwaage DW1 die in dem ersten Zuströmpfad 21a von der Pumpe 2 zum Fahrmotor 6 zuströmende Druckmittelmenge steuerbar und somit die Zulaufseite des Fahrmotors 6 lastunabhängig steuerbar. Entsprechend ist in der zweiten Steuerstellung 20c des Steuerschiebers 11 mittels der zweiten Druckwaage DW2 die in dem zweiten Zuströmpfad 21b von der Pumpe 2 zum Fahrmotor 6 zuströmende Druckmittelmenge steuerbar und somit die Zulaufseite des Fahrmotors 6 lastunabhängig steuerbar.

In der ersten Steuerstellung 20b des Steuerschiebers 11 ist somit mittels der zweiten Druckwaage DW2 die in dem ersten Abströmpfad 22a vom Fahrmotor 6 zum Behälter 4 abströmende Druckmittelmenge steuerbar und somit die Ablaufseite des Fahrmotors 6 steuerbar und eine Bremsventilfunktion erzielbar. Entsprechend ist in der zweiten Steuerstellung 20c des Steuerschiebers 11 mittels der ersten Druckwaage DW1 die in dem zweiten Abströmpfad 22b vom Fahrmotor 6 zum Behälter 4 abströmende Druckmittelmenge steuerbar und somit die Ablaufseite des Fahrmotors 6 steuerbar und eine Bremsventilfunktion erzielbar.

Das Steuerventil 10 ist mittels Federn 80a, 80b in die Mittelstellung 20a beaufschlagt. Mittels eines in einer ersten Ansteuerleitung 81a anstehenden Steuersignals ist das Steuerventil 10 in Richtung der ersten Steuerstellung 20b beaufschlagt. Mittels eines in einer zweiten Ansteuerleitung 81b anstehenden Steuersignals ist das Steuerventil 10 in Richtung der zweiten Steuerstellung 20c beaufschlagt.

Bei dem erfindungsgemäßen Steuerventil 10 ist eine Proportionalventileinrichtung 30 vorgesehen, mittels der in der ersten Steuerstellung 20b des Steuerschiebers 11 die Beaufschlagung der zweiten, die Ablaufseite des Fahrmotors 6 steuernde Druckwaage DW2 in Richtung einer Sperrstellung SST in Abhängigkeit von der Drehzahl des Fahrmotors 6 und/oder in Abhängigkeit von dem am ersten Fahrmotoranschluss A anstehenden Zulaufdruck des Fahrmotors 6 steuerbar ist und mittels der in der zweiten Steuerstellung 20c des Steuerschiebers 11 die Beaufschlagung der ersten, die Ablaufseite des Fahrmotors 6 steuernde Druckwaage DW1 in Richtung einer Sperrstellung SST in Abhängigkeit von der Drehzahl des Fahrmotors 6 und/oder in Abhängigkeit von dem am zweiten Fahrmotoranschluss B anstehenden Zulaufdruck des Fahrmotors 6 steuerbar ist.

In der ersten Steuerstellung 20b des Steuerschiebers 11 ist die erste, die Zulaufseite des Fahrmotors 6 steuernde Druckwaage DW1 in Richtung einer Öffnungsstellung OST von dem Druck stromab einer ersten zulaufseitigen Drosselstelle DS1 des Steuerschiebers 11 und in Richtung der Sperrstellung SST von dem Lastdruck des Fahrmotors 6 sowie einer Feder 33a beaufschlagbar . An eine in Richtung der Öffnungsstellung OST wirkende Steuerfläche der Druckwaage DW1 ist hierzu eine von dem ersten Zuströmpfad 21a zwischen der ersten zulaufseitigen Drosselstelle DS1 und der ersten Druckwaage DW1 abzweigende Steuerleitung 32a geführt. An eine in Richtung der Sperrstellung SST wirkende Steuerfläche der Druckwaage DW1 ist hierzu eine Steuerleitung 31a geführt, die von der den Zulaufdruck in der Zulaufseite des Fahrmotors 6 erfassende Lastdruckmeldeleitung 25a abzweigt.

In der zweiten Steuerstellung 20c des Steuerschiebers 10 ist die zweite, die Zulaufseite des Fahrmotors 6 steuernde Druckwaage DW2 in Richtung einer Öffnungsstellung OST von dem Druck stromab einer zweiten zulaufseitigen Drosselstelle DS2 des Steuerschiebers 11 und in Richtung der Sperrstellung SST von dem Lastdruck des Fahrmotors 6 sowie einer Feder 33b beaufschlagbar. An eine in Richtung der Öffnungsstellung OST wirkende Steuerfläche der Druckwaage DW2 ist hierzu eine von dem zweiten Zuströmpfad 21b zwischen der zweiten zulaufseitigen Drosselstelle DS2 und der zweiten Druckwaage DW2 abzweigende Steuerleitung 32b geführt. An eine in Richtung der Sperrstellung SST wirkende Steuerfläche der Druckwaage DW2 ist hierzu eine Steuerleitung 31b geführt, die von der den Zulaufdruck in der Zulaufseite des Fahrmotors 6 erfassende Lastdruckmeldeleitung 25b abzweigt.

In der ersten Steuerstellung 20b des Steuerschiebers 11 ist die zweite, die Ablaufseite des Fahrmotors 6 steuernde Druckwaage DW2 in Richtung der Öffnungsstellung OST von dem Druck stromab einer ersten ablaufseitigen Drosselstelle DS3 des Steuerschiebers 11 und in Richtung der Sperrstellung SST von einem Ausgangsdruck der Proportionalventileinrichtung 30 sowie der Feder 33b beaufschlagbar. An eine in Richtung der Öffnungsstellung OST wirkende Steuerfläche der Druckwaage DW2 ist hierzu eine von dem ersten Abströmpfad 22a zwischen der ersten ablaufseitigen Drosselstelle DS3 und der zweiten Druckwaage DW2 abzweigende Steuerleitung 35b geführt. An eine in Richtung der Sperrstellung SST wirkende Steuerfläche der Druckwaage DW2 ist hierzu eine Steuerleitung 40b geführt, die mit einem zweiten Steueranschluss SA2 des Steuerventils 10 in Verbindung bringbar ist.

In der zweiten Steuerstellung 20c des Steuerschiebers 11 ist die erste, die Ablaufseite des Fahrmotors 6 steuernde Druckwaage DW1 in Richtung einer Öffnungsstellung OST von dem Druck stromab einer zweiten ablaufseitigen Drosselstelle DS4 des Steuerschiebers 11 und in Richtung der Sperrstellung SST von dem Ausgangsdruck der Proportionalventileinrichtung 30 sowie der Feder 33a beaufschlagbar. An eine in Richtung der Öffnungsstellung OST wirkende Steuerfläche der Druckwaage DW1 ist hierzu eine von dem zweiten Abströmpfad 22b zwischen der zweiten ablaufseitigen Drosselstelle DS4 und der ersten Druckwaage DW1 abzweigende Steuerleitung 35a geführt. An eine in Richtung der Sperrstellung SST wirkende Steuerfläche der Druckwaage DW1 ist hierzu eine Steuerleitung 40a geführt, die mit einem ersten Steueranschluss SA1 des Steuerventils 10 in Verbindung bringbar ist.

In der Mittelstellung 20a des Steuerventils 10 sind die Steueranschlüsse SA1 und SA2 abgesperrt. In der ersten Steuerstellung 20b des Steuerventils 10 ist der erste Steueranschluss SA1 abgesperrt und der zweite Steueranschluss SA2 mit der Steuerleitung 40b verbunden. In der zweiten Steuerstellung 20c des Steuerventils 10 ist der zweite Steueranschluss SA2 abgesperrt und der erste Steueranschluss SA1 mit der Steuerleitung 40a verbunden.

Der erste Steueranschluss SA1 des Steuerventils 10 steuert somit in der zweiten Steuerstellung 20c des Steuerschiebers 11 die Beaufschlagung der ersten, die Ablaufseite des Fahrmotors 6 steuernden Druckwaage DW1 in Richtung der Sperrstellung SST. Der zweite Steueranschluss SA2 des Steuerventils 10 steuert somit in der ersten Steuerstellung 20b des Steuerschiebers 11 die Beaufschlagung der zweiten, die Ablaufseite des Fahrmotors 6 steuernde Druckwaage DW2 in Richtung der Sperrstellung SST.

Die Proportionalventileinrichtung 30 ist elektrisch angesteuert.

Zur Ansteuerung der Proportionalventileinrichtung 30 ist eine elektronische Steuereinrichtung 50 vorgesehen, die eingangsseitig mit einer die Drehzahl des Fahrmotors 6 erfassenden Drehzahlsensoreinrichtung 51 und/oder einer den am ersten Fahrmotoranschluss A und/oder am zweiten Fahrmotoranschluss B anstehenden Zulaufdruck des Fahrmotors 6 erfassenden Drucksensoreinrichtung 52 in Wirkverbindung steht, und ausgangsseitig mit der Proportionalventileinrichtung 30 zu deren Ansteuerung in Wirkverbindung steht. Die Drucksensoreinrichtung 52 umfasst einen den Druck in der ersten Druckmittelleitung 7a und somit am ersten Fahrmotoranschluss A anstehenden Druck erfassenden Drucksensor 52a und einen den Druck in der zweiten Druckmittelleitung 7b und somit am zweiten Fahrmotoranschluss B anstehenden Druck erfassenden Drucksensor 52b.

In dem Ausführungsbeispiel der Figur 1 weist die Proportionalventileinrichtung 30 ein erstes elektrisch angesteuertes Proportionaldruckminderventil 30a auf, das zur Steuerung der ersten, die Ablaufseite des Fahrmotors 6 steuernden Druckwaage DW1 in Richtung der Sperrstellung SST vorgesehen, und ein zweites elektrisch angesteuertes Proportionaldruckminderventil 30b auf, das zur Steuerung der zweiten, die Ablaufseite des Fahrmotors 6 steuernden Druckwaage DW2 in Richtung der Sperrstellung SST vorgesehen ist.

Das erste Proportionaldruckminderventil 30a ist eingangsseitig an eine Versorgungsdruckquelle angeschlossen, ausgangsseitig an eine den Ausgangsdruck führende Steuerleitung 60a sowie ausgangsseitig mittels einer Behälterleitung 62a an den Behälter 4 angeschlossen. In der Figur 1 ist als Versorgungsdruckquelle die Pumpe 2 vorgesehen, wobei eine Versorgungsleitung 61a des Proportionaldruckminderventils 30a an die Förderleitung 5 angeschlossen ist. Die Steuerleitung 60a des ersten Proportionaldruckminderventils 30a ist mit dem ersten Steueranschluss SA1 des Steuerventils 10 verbunden.

Das zweite Proportionaldruckminderventil 30b ist eingangsseitig an eine Versorgungsdruckquelle angeschlossen, ausgangsseitig an eine den Ausgangsdruck führende Steuerleitung 60b sowie ausgangsseitig mittels einer Behälterleitung 62b an den Behälter 4 angeschlossen. In der Figur 1 ist als Versorgungsdruckquelle die Pumpe 2 vorgesehen, wobei eine Versorgungsleitung 61b des Proportionaldruckminderventils 30b an die Förderleitung 5 angeschlossen ist. Die Steuerleitung 60b des zweiten Proportionaldruckminderventils 30b ist mit dem zweiten Steueranschluss SA2 des Steuerventils 10 verbunden.

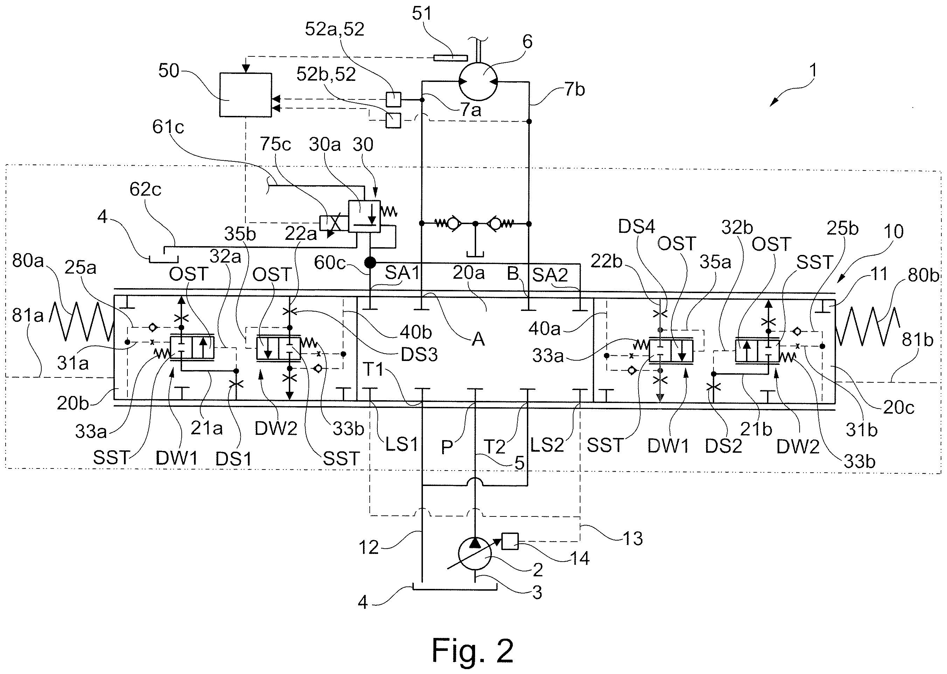

In dem Ausführungsbeispiel der Figur 2 weist die Proportionalventileinrichtung 30 ein einzelnes elektrisch angesteuertes Proportionaldruckminderventil 30c auf, das zur Steuerung der ersten, die Ablaufseite des Fahrmotors 6 steuernden Druckwaage DW1 in Richtung der Sperrstellung SST und zur Steuerung der zweiten, die Ablaufseite des Fahrmotors 6 steuernden Druckwaage DW2 in Richtung der Sperrstellung SST vorgesehen ist

Das Proportionaldruckminderventil 30c ist eingangsseitig an eine Versorgungsdruckquelle angeschlossen, ausgangsseitig an eine den Ausgangsdruck führende Steuerleitung 60c sowie ausgangsseitig mittels einer Behälterleitung 62c an den Behälter 4 angeschlossen. In der Figur 2 ist als Versorgungsdruckquelle die Pumpe 2 vorgesehen, wobei eine Versorgungsleitung 61c des Proportionaldruckminderventils 30c an die Förderleitung 5 angeschlossen ist. Die Steuerleitung 60c des Proportionaldruckminderventils 30c ist mit dem ersten Steueranschluss SA1 und dem zweiten Steueranschluss SA2 des Steuerventils 10 verbunden.

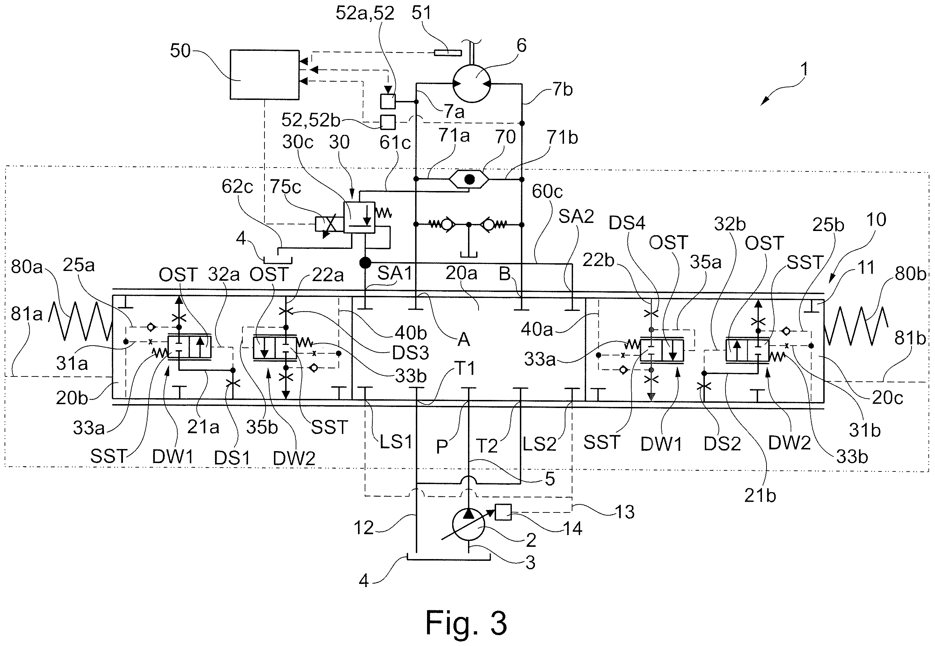

In der Figur 3 weist die Proportionalventileinrichtung 30 - analog zur Figur 2 - ein einzelnes elektrisch angesteuertes Proportionaldruckminderventil 30c auf, das zur Steuerung der ersten, die Ablaufseite des Fahrmotors 6 steuernden Druckwaage DW1 in Richtung der Sperrstellung SST und zur Steuerung der zweiten, die Ablaufseite des Fahrmotors 6 steuernden Druckwaage DW2 in Richtung der Sperrstellung SST vorgesehen ist.

Das Proportionaldruckminderventil 30c ist eingangsseitig an eine Versorgungsdruckquelle angeschlossen, ausgangsseitig an eine den Ausgangsdruck führende Steuerleitung 60c sowie ausgangsseitig mittels einer Behälterleitung 62c an den Behälter 4 angeschlossen. Die Steuerleitung 60c des Proportionaldruckminderventils 30c ist mit dem ersten Steueranschluss SA1 und dem zweiten Steueranschluss SA2 des Steuerventils 10 verbunden.

In der Figur 3 ist als Versorgungsdruckquelle des Proportionaldruckminderventils 30c der von dem Fahrmotor 6 in einer Bremsphase erzeugte Bremsdruck vorgesehen.

Hierzu ist die Proportionalventileinrichtung 30c eingangsseitig mittels einer Wechselventileinrichtung 70 mit den beiden Fahrmotoranschlüssen A, B verbunden.

Die Wechselventileinrichtung 70 steht an einem ersten Eingang mit dem ersten Fahrmotoranschluss A in Verbindung und an einem zweiten Eingang mit dem zweiten Fahrmotoranschluss B in Verbindung. Hierzu ist eine mit dem ersten Eingang der Wechselventileinrichtung 70 verbundene Steuerleitung 71a an die erste Druckmittelleitung 7a und eine mit dem zweiten Eingang der Wechselventileinrichtung 70 verbundene Steuerleitung 71b an die zweite Druckmittelleitung 7b angeschlossen. Ein Ausgang der Wechselventileinrichtung 70 ist an die zur Proportionalventileinrichtung 30c geführte Versorgungsleitung 61c angeschlossen.

Die Proportionaldruckminderventile 30a, 30b der Figur 1 und das Proportionaldruckminderventil 30c der Figuren 2, 3 ist mittels eines Proportionalmagneten 75a, 75b bzw. 75c, der zur Ansteuerung mit der elektronischen Steuereinrichtung 50 in Verbindung steht, in eine Steuerstellung beaufschlagbar, in der aus dem in der Versorgungsleitung 61a, 61b bzw. 61c anstehenden Versorgungsdruck ein in der Steuerleitung 60a, 60b bzw. 60c anstehender Ansteuerdruck für die Druckwaage DW1 bzw. DW2 ansteht.

Der hydrostatische Fahrantrieb 1 der Figuren 1 bis 3 arbeitet wie folgt.

Bei einem in einer ersten Ansteuerleitung 81a anstehenden Steuersignals wird das Steuerventil 10 in Richtung der ersten Steuerstellung 20b betätigt. In der ersten Steuerstellung 20b des Steuerschiebers 11 ist mittels der ersten Druckwaage DW1 die in dem ersten Zuströmpfad 21a von der Pumpe 2 zum Fahrmotor 6 zuströmende Druckmittelmenge steuerbar und somit die Zulaufseite des Fahrmotors 6 lastunabhängig steuerbar. In der ersten Steuerstellung 20b des Steuerschiebers 11 ist mittels der zweiten Druckwaage DW2 die in dem ersten Abströmpfad 22a vom Fahrmotor 6 zum Behälter 4 abströmende Druckmittelmenge steuerbar und somit die Ablaufseite des Fahrmotors 6 steuerbar und eine Bremsventilfunktion erzielbar.

In der ersten Steuerstellung 20b des Steuerventils 10 ist der erste Steueranschluss SA1 des Steuerventils 10 abgesperrt und der mit der Steuerleitung 60b des zweiten Proportionaldruckminderventils 30b (Figur 1) bzw. der Steuerleitung 60c des Proportionaldruckminderventils 30c (Figuren 2, 3) verbundene zweite Steueranschluss SA2 mit der Steuerleitung 40b der in dem ersten Abströmpfad 22a angeordneten zweiten Druckwaage DW2 verbunden.

Von der elektronischen Steuereinrichtung 50 kann in Abhängigkeit von der mittels des Drehzahlsensoreinrichtung 51 erfassten Drehzahl des Fahrmotors 6 und/oder des mittels des Drucksensors 52a erfassten Zulaufdruckes des Fahrmotors 6 in der ersten Druckmittelleitung 7a durch entsprechende Ansteuerung des Proportionaldruckminderventils 30b (Figur 1) bzw. des Proportionaldruckminderventils 30c (Figuren 2, 3) aus dem in der Versorgungsleitung 61b (Figur 1) bzw. der Versorgungsleitung 61c (Figuren 2, 3) anstehenden Versorgungsdruck ein in der Steuerleitung 60b (Figur 1) bzw. in der Steuerleitung 60c (Figuren 2, 3) anstehender Ausgangsdruck erzeugt werden, der die zweite Druckwaage DW2 in Richtung der Sperrstellung SST beaufschlagt, wodurch der Fahrmotor 6 abgebremst wird.

Bei einem in einer zweiten Ansteuerleitung 81b anstehenden Steuersignals wird das Steuerventil 10 in Richtung der zweiten Steuerstellung 20c betätigt. In der zweiten Steuerstellung 20c des Steuerschiebers 11 ist mittels der zweiten Druckwaage DW2 die in dem zweiten Zuströmpfad 21b von der Pumpe 2 zum Fahrmotor 6 zuströmende Druckmittelmenge steuerbar und somit die Zulaufseite des Fahrmotors 6 lastunabhängig steuerbar. In der zweiten Steuerstellung 20c des Steuerschiebers 11 ist mittels der ersten Druckwaage DW1 die in dem zweiten Abströmpfad 22b vom Fahrmotor 6 zum Behälter 4 abströmende Druckmittelmenge steuerbar und somit die Ablaufseite des Fahrmotors 6 steuerbar und eine Bremsventilfunktion erzielbar.

In der zweiten Steuerstellung 20c des Steuerventils 10 ist der zweite Steueranschluss SA2 des Steuerventils 10 abgesperrt und der mit der Steuerleitung 60a des ersten Proportionaldruckminderventils 30a (Figur 1) bzw. der Steuerleitung 60c des Proportionaldruckminderventils 30c (Figuren 2, 3) verbundene erste Steueranschluss SA1 mit der Steuerleitung 40a der in dem zweiten Abströmpfad 22b angeordneten ersten Druckwaage DW1 verbunden.

Von der elektronischen Steuereinrichtung 50 kann in Abhängigkeit von der mittels des Drehzahlsensoreinrichtung 51 erfassten Drehzahl des Fahrmotors 6 und/oder des mittels des Drucksensors 52b erfassten Zulaufdruckes des Fahrmotors 6 in der zweiten Druckmittelleitung 7b durch entsprechende Ansteuerung des Proportionaldruckminderventils 30a (Figur 1) bzw. des Proportionaldruckminderventils 30c (Figuren 2, 3) aus dem in der Versorgungsleitung 61a (Figur 1) bzw. der Versorgungsleitung 61c (Figuren 2, 3) anstehenden Versorgungsdruck ein in der Steuerleitung 60a (Figur 1) bzw. in der Steuerleitung 60c (Figuren 2, 3) anstehender Ausgangsdruck erzeugt werden, der die erste Druckwaage DW1 in Richtung der Sperrstellung SST beaufschlagt, wodurch der Fahrmotor 6 abgebremst wird.

Die Erfindung ist nicht auf die in den Figuren dargestellten Ausführungsbeispiele beschränkt.

Die eingangsseitige Verbindung der Proportionalventileinrichtung 30 mittels der Wechselventileinrichtung 70 mit den beiden Fahrmotoranschlüssen A, B kann ebenfalls bei der Figur 1 zur Versorgung der beiden Proportionaldruckminderventile 30a, 30b mit einem Versorgungsdruck vorgesehen werden.

## Patentansprüche

1. Steuerventil (10) zur lastunabhängigen Steuerung eines hydraulischen Fahrmotors (6) mit einem Steuerschieber (11) zur Steuerung der Bewegungsrichtung und der Bewegungsgeschwindigkeit des Fahrmotors (6), wobei das Steuerventil (10) an einen Pumpenanschluss (P), an einen Behälteranschluss (T1; T2), an mindestens einen Lastdruckmeldeleitungsanschluss (LS1; LS2), an einen ersten Fahrmotoranschluss (A) und an einen zweiten Fahrmotoranschluss (B) angeschlossen ist, wobei das Steuerventil (10) eine erste Druckwaage (DW1) und eine zweite Druckwaage (DW2) umfasst,
wobei in einer ersten Steuerstellung (20b) des Steuerschiebers (11), in dem der Pumpenanschluss (P) mittels eines ersten Zuströmpfades (21a) mit dem ersten Fahrmotoranschluss (A) und der zweite Fahrmotoranschluss (B) mittels eines ersten Abströmpfades (22a) mit dem Behälteranschluss (T1; T2) verbunden ist, die erste Druckwaage (DW1) in dem ersten Zuströmpfad (21a) angeordnet ist und die zweite Druckwaage (DW2) in dem ersten Abströmpfad (22a) angeordnet ist, wobei in einer zweiten Steuerstellung (20c) des Steuerschiebers (11), in dem der Pumpenanschluss (P) mittels eines zweiten Zuströmpfades (21b) mit dem zweiten Fahrmotoranschluss (B) und der erste Fahrmotoranschluss (A) mittels eines zweiten Abströmpfades (22b) mit dem Behälteranschluss (T1; T2) verbunden ist, die zweite Druckwaage (DW2) in dem zweiten Zuströmpfad (21b) angeordnet ist und die erste Druckwaage (DW1) in dem zweiten Abströmpfad (22b) angeordnet ist,
wobei in der ersten Steuerstellung (20b) des Steuerschiebers (11) mittels der zweiten Druckwaage (DW2) die in dem ersten Abströmpfad (22a) vom Fahrmotor (6) zu einem Behälter (4) abströmende Druckmittelmenge steuerbar ist und in der zweiten Steuerstellung (20c) des Steuerschiebers (11) mittels der ersten Druckwaage (DW1) die in dem zweiten Abströmpfad (22b) vom Fahrmotor (6) zum Behälter (4) abströmende Druckmittelmenge steuerbar ist,
**dadurch gekennzeichnet, dass** eine Proportionalventileinrichtung (30) vorgesehen ist, mittels der in der ersten Steuerstellung (20b) des Steuerschiebers (11) die Beaufschlagung der zweiten Druckwaage (DW2) in Richtung einer Sperrstellung (SST) in Abhängigkeit von der Drehzahl des Fahrmotors (6) und/oder in Abhängigkeit von dem am ersten Fahrmotoranschluss (A) anstehenden Zulaufdruck des Fahrmotors (6) steuerbar ist und mittels der in der zweiten Steuerstellung (20c) des Steuerschiebers (11) die Beaufschlagung der ersten Druckwaage (DW1) in Richtung einer Sperrstellung (SST) in Abhängigkeit von der Drehzahl des Fahrmotors (6) und/oder in Abhängigkeit von dem am zweiten Fahrmotoranschluss (B) anstehenden Zulaufdruck des Fahrmotors (6) steuerbar ist.

2. Steuerventil (10) nach Anspruch 1, **dadurch gekennzeichnet, dass** in der ersten Steuerstellung (20b) des Steuerschiebers (11) die erste Druckwaage (DW1) in Richtung einer Öffnungsstellung (OST) von dem Druck stromab einer ersten zulaufseitigen Drosselstelle (DS1) des Steuerschiebers (11) und in Richtung der Sperrstellung (SST) von dem Lastdruck des Fahrmotors (6) sowie einer Feder (33a) beaufschlagbar ist und dass in der zweiten Steuerstellung (20c) des Steuerschiebers (11) die zweite Druckwaage (DW2) in Richtung einer Öffnungsstellung (OST) von dem Druck stromab einer zweiten zulaufseitigen Drosselstelle (DS2) des Steuerschiebers (11) und in Richtung der Sperrstellung (SST) von dem Lastdruck des Fahrmotors (6) sowie einer Feder (33b) beaufschlagbar ist.

3. Steuerventil (10) nach Anspruch 1 oder 2, **dadurch gekennzeichnet, dass** in der ersten Steuerstellung (20b) des Steuerschiebers (11) die zweite Druckwaage (DW2) in Richtung der Öffnungsstellung (OST) von dem Druck stromab einer ersten ablaufseitigen Drosselstelle (DS3) des Steuerschiebers (11) und in Richtung der Sperrstellung (SST) von einem Ausgangsdruck der Proportionalventileinrichtung (30) sowie einer Feder (33b) beaufschlagbar ist und dass in der zweiten Steuerstellung (20c) des Steuerschiebers (11) die erste Druckwaage (DW1) in Richtung einer Öffnungsstellung (OST) von dem Druck stromab einer zweiten ablaufseitigen Drosselstelle (DS4) des Steuerschiebers (10) und in Richtung der Sperrstellung (SST) von dem Ausgangsdruck der Proportionalventileinrichtung (30) sowie einer Feder (33a) beaufschlagbar ist.

4. Steuerventil (10) nach einem der Ansprüche 1 bis 3, **dadurch gekennzeichnet, dass** die Proportionalventileinrichtung (30) elektrisch angesteuert ist.

5. Steuerventil (10) nach Anspruch 3 oder 4, **dadurch gekennzeichnet, dass** die Proportionalventileinrichtung (30) mindestens ein elektrisch angesteuertes Proportionaldruckminderventil (30a; 30b; 30c) aufweist, das eingangsseitig an eine Versorgungsdruckquelle angeschlossen ist, ausgangsseitig an eine den Ausgangsdruck führende Steuerleitung (60a; 60b; 60c) sowie ausgangsseitig an einen Behälter (4) angeschlossen ist.

6. Steuerventil (10) nach Anspruch 4 oder 5, **dadurch gekennzeichnet, dass** eine elektronische Steuereinrichtung (50) vorgesehen ist, die eingangsseitig mit einer die Drehzahl des Fahrmotors (6) erfassenden Drehzahlsensoreinrichtung (51) und/oder einer den am ersten Fahrmotoranschluss (A) und/oder am zweiten Fahrmotoranschluss (B) anstehenden Zulaufdruck des Fahrmotors (6) erfassenden Drucksensoreinrichtung (52; 52a, 52b) in Wirkverbindung steht, und ausgangsseitig mit der Proportionalventileinrichtung (30) zu deren Ansteuerung in Wirkverbindung steht.

7. Steuerventil (10) nach einem der Ansprüche 1 bis 6, **dadurch gekennzeichnet, dass** die Proportionalventileinrichtung (30) eingangsseitig an eine mit dem Pumpenanschluss (P) in Verbindung stehende Pumpe (2) angeschlossen ist.

8. Steuerventil (10) nach einem der Ansprüche 1 bis 6, **dadurch gekennzeichnet, dass** die Proportionalventileinrichtung (30) eingangsseitig mittels einer Wechselventileinrichtung (70) mit den Fahrmotoranschlüssen (A, B) verbunden ist.

9. Steuerventil (10) nach Anspruch 8, **dadurch gekennzeichnet, dass** die Wechselventileinrichtung (70) an einem ersten Eingang mit dem ersten Fahrmotoranschluss (A) in Verbindung steht, an einem zweiten Eingang mit dem zweiten Fahrmotoranschluss (B) in Verbindung steht und an einem Ausgang mit der Proportionalventileinrichtung (30) in Verbindung steht.

10. Steuerventil (10) nach einem der Ansprüche 1 bis 9, **dadurch gekennzeichnet, dass** die Proportionalventileinrichtung (30) ein erstes elektrisch angesteuertes Proportionaldruckminderventil (30a) aufweist, das zur Steuerung der ersten Druckwaage (DW1) in Richtung der Sperrstellung (SST) vorgesehen ist, und ein zweites elektrisch angesteuertes Proportionaldruckminderventil (30b) aufweist, das zur Steuerung der zweiten Druckwaage (DW2) in Richtung der Sperrstellung (SST) vorgesehen ist.

11. Steuerventil (10) nach einem der Ansprüche 1 bis 9, **dadurch gekennzeichnet, dass** die Proportionalventileinrichtung (30) ein einzelnes elektrisch angesteuertes Proportionaldruckminderventil (30c) aufweist, das zur Steuerung der ersten Druckwaage (DW1) in Richtung der Sperrstellung (SST) und zur Steuerung der zweiten Druckwaage (DW2) in Richtung der Sperrstellung (SST) vorgesehen ist.

12. Steuerventil (10) nach einem der Ansprüche 1 bis 11, **dadurch gekennzeichnet, dass** das Steuerventil (10) einen ersten Steueranschluss (SA1) aufweist, der in der zweiten Steuerstellung (20c) des Steuerschiebers (11) die Beaufschlagung der ersten Druckwaage (DW1) in Richtung der Sperrstellung (SST) steuert, und einen zweiten Steueranschluss (SA2) aufweist, der in der ersten Steuerstellung (20b) des Steuerschiebers (11) die Beaufschlagung der zweiten Druckwaage (DW2) in Richtung der Sperrstellung (SST) steuert.

13. Steuerventil (10) nach Anspruch 10 und 12, **dadurch gekennzeichnet, dass** das erste elektrisch angesteuerte Proportionaldruckminderventil (30a) mit einer den Ausgangsdruck führenden ersten Steuerleitung (60a) mit dem ersten Steueranschluss (SA1) des Steuerventils (10) verbunden ist, und das zweite elektrisch angesteuerte Proportionaldruckminderventil (30b) mit einer den Ausgangsdruck führenden zweiten Steuerleitung (60b) mit dem zweiten Steueranschluss (SA2) des Steuerventils (10) verbunden ist.

14. Steuerventil (10) nach Anspruch 11 und 12, **dadurch gekennzeichnet, dass** das einzelne elektrisch angesteuerte Proportionaldruckminderventil (30c) mit einer den Ausgangsdruck führenden Steuerleitung (60c) mit dem ersten Steueranschluss (SA1) des Steuerventils (10) und mit dem zweiten Steueranschluss (SA2) des Steuerventils (10) verbunden ist.

15. Hydrostatischer Fahrantrieb (1) aufweisend eine Pumpe (2), einen hydraulischen Fahrmotor (6) und ein Steuerventil (10) nach einem der vorangegangenen Ansprüche, das den Fahrmotor (6) ansteuert.

16. Mobile Arbeitsmaschine, insbesondere Bagger, mit einem hydrostatischen Fahrantrieb (1) nach Anspruch 15.

17. Mobile Antriebmaschine nach Anspruch 16, **dadurch gekennzeichnet, dass** die mobile Arbeitsmaschine einen Unterwagen und einen auf dem Unterwagen drehbar angeordneten Oberwagen aufweist, wobei der Fahrmotor (6) im Unterwagen angeordnet ist und das Steuerventil (10) im Oberwagen angeordnet ist.
